# EUROPÄISCHE PATENTANMELDUNG

(11) **EP 2 759 940 A1**
(43) Veröffentlichungstag der Anmeldung: **30.07.2014**
(21) Anmeldenummer: 14000217.1
(22) Anmeldetag: 21.01.2014
(51) Int. Cl.: G06F 11/36, G06F 11/28, G06F 21/50, G06F 21/77

(54) **Verfahren zur Ausführung eines Programms über einen Mikroprozessor auf einem Sicherheitsmodul**

(30) Priorität: 23.01.2013 DE 102013001143
(71) Anmelder: Giesecke & Devrient GmbH, 81677 München (DE)
(72) Erfinder: Gibis, Oliver, 81825 München (DE); Szonn, Roberto, 81827 München (DE)

(57) **Zusammenfassung**

Die Erfindung betrifft ein Verfahren zur Ausführung eines Programms über einen Mikroprozessor auf einem Sicherheitsmodul, insbesondere einer Chipkarte, wobei im Programmablauf eine Anzahl von Funktionen (f) aufgerufen wird. Zunächst wird der Stand eines globalen Zählers (GC), der im Programm übergreifend für alle Funktionen (f) gültig ist, mit einem vorgegeben Wert (SV) initialisiert. Für eine jeweilige Funktion (f) zumindest eines Teils der Funktionen (f) wird dann in einem Abschnitt des Programms zeitlich vor dem Aufruf der jeweiligen Funktion (f) der Stand des globalen Zählers (GC) mittels einer ersten Operation verändert, welche durch eine zweite komplementäre Operation rückgängig gemacht werden kann. Anschließend wird innerhalb des Aufrufs der jeweiligen Funktion (f) der Stand des globalen Zählers (GC) mittels der zweiten Operation verändert. Schließlich wird an zumindest einem Prüfzeitpunkt (CP), zu dem bei korrektem Programmablauf der Stand des globalen Zählers (GC) genauso oft mittels der ersten Operation gemäß Schritt ii) wie mit der zweiten Operation gemäß Schritt iii) verändert wurde, der Stand des globalen Zählers (GV) mit dem vorgegebenen Wert (SV) verglichen, wobei bei einer Übereinstimmung die Ausführung des Programms fortgesetzt wird und ansonsten eine Fehlerbehandlung (FT) erfolgt.

## Beschreibung

Die Erfindung betrifft ein Verfahren zur Ausführung eines Programms über einen Mikroprozessor auf einem Sicherheitsmodul, wobei das Sicherheitsmodul vorzugsweise ein Hardwaresicherheitsmodul in der Form einer Chipkarte ist.

Aus dem Stand der Technik sind viele verschiedene Angriffe bekannt, mit denen der Ablauf eines Programms in einem Mikroprozessor eines tragbaren Datenträgers gestört werden kann. Beispielsweise können über einen sog. Lichtangriff auf die Oberfläche einer Chipkarte während der Abarbeitung eines Kommandos im Chipkartenprogramm einzelne Programmzeilen oder sogar Unterfunktionsaufrufe übersprungen werden. Auf diese Weise kann ein Angreifer Daten aus der Chipkarte ausspähen und unter Umständen beliebig ändern.

Zur Erkennung von Manipulationen während der Programmausführung sind verschiedene Verfahren zur Programmflusskontrolle bekannt. In dem Dokument WO 03/042547 A2 wird die Verwendung eines Zählers beschrieben, dessen Stand bei Ausführung kontrollierter Programmabschnitte inkrementiert wird. Zu vorbestimmten Prüfpunkten wird dann überprüft, ob der Stand des Zählers einem zulässigen Vergleichswert entspricht. Ist dies nicht der Fall, erfolgt eine Fehlerbehandlung.

Bei bekannten Verfahren, welche zur Detektion von Angriffen bei einer Programmausführung Zähler verwenden, erweist es sich als nachteilhaft, dass zu verschiedenen Prüfzeitpunkten der Stand des Zählers mit unterschiedlichen Vergleichswerten verglichen werden muss. Insbesondere bei Programmen mit hoher Komplexität besteht dabei die Gefahr, dass die Vergleichswerte nicht korrekt festgelegt sind und somit unter Umständen ein Angriff erkannt wird, obwohl das Programm korrekt ausgeführt wird.

Aufgabe der Erfindung ist es deshalb, ein Verfahren zur Ausführung eines Programms über einen Mikroprozessor auf einem Sicherheitsmodul zu schaffen, mit dem einfach und zuverlässig Manipulationen bei der Programmausführung erkannt werden.

Diese Aufgabe wird durch den Gegenstand der unabhängigen Ansprüche gelöst. Weiterbildungen der Erfindung sind in den abhängigen Ansprüchen definiert.

Im Rahmen des Programmablaufs basierend auf dem erfindungsgemäßen Verfahren wird in an sich bekannter Weise eine Anzahl von Funktionen aufgerufen. In einem Schritt i) des Verfahrens wird dabei zunächst der Stand eines globalen Zählers, der im Programm übergreifend für alle diese Funktionen gültig ist, mit einem vorgegebenen Wert initialisiert.

In einem Schritt ii) wird für eine jeweilige Funktion zumindest eines Teils der Anzahl von Funktionen und insbesondere für jede der Anzahl von Funktionen in einem Abschnitt des Programms zeitlich vor dem Aufruf der jeweiligen Funktion der Stand des globalen Zählers mittels einer ersten Operation verändert. Die erste Operation kann dabei durch eine zweite komplementäre Operation rückgängig gemacht werden. Dabei wird in einem Schritt iii) die zweite Operation innerhalb des Aufrufs der jeweiligen Funktion ausgeführt. Das heißt, innerhalb der aufgerufenen jeweiligen Funktion wird der Stand des globalen Zählers mittels der zweiten Operation verändert.

Soweit in der vorliegenden Schrift die Formulierung "innerhalb des Aufrufs einer Funktion" verwendet wird, kann auch die teils geläufigere Formulierung "innerhalb der aufgerufenen Funktion" verwendet werden.

Schließlich wird in einem Schritt iv) an zumindest einem Prüfzeitpunkt, zu dem bei korrektem Programmablauf der Stand des globalen Zählers für aufgerufene Funktionen genauso oft mittels der ersten Operation gemäß obigem Schritt ii) wie mit der zweiten Operation gemäß obigem Schritt iii) verändert wurde, der Stand des globalen Zählers mit dem vorgegebenen Wert verglichen. Bei einer Übereinstimmung wird die Ausführung des Programms fortgesetzt. Ansonsten (d.h. bei einer Abweichung) wird eine Fehlerbehandlung durchgeführt. In einer bevorzugten Variante stellt die Fehlerbehandlung den Abbruch des Programms dar.

Das erfindungsgemäße Verfahren weist den Vorteil auf, dass zur Erkennung von Manipulationen bzw. Angriffen der Stand eines globalen Zählers für entsprechende Prüfzeitpunkte nicht mit unterschiedlichen Vergleichswerten, sondern lediglich mit einem einmal festgelegten vorgegebenen Wert verglichen werden muss. Durch diesen starren Vergleich wird vermieden, dass entsprechende Vergleichswerte z.B. bei hochkomplexen Programmen falsch gewählt werden und eine an sich korrekte Programmausführung als fehlerhaft eingestuft wird.

Die oben beschriebenen ersten und zweiten Operationen zur Veränderung des globalen Zählers können je nach Anwendungsfall verschieden ausgestaltet sein. Für zumindest einen Teil der jeweiligen Funktionen und insbesondere für alle jeweiligen Funktionen, für welche die obigen Schritte ii) und iii) durchgeführt werden, stellt die erste Operation in einer bevorzugten Variante eine Inkrementierung des Stands des globalen Zählers um eine vorbestimmte Konstante dar, wohingegen die zweite Operation eine entsprechende Dekrementierung des Stands des globalen Zählers und die vorbestimmte Konstante repräsentiert. Alternativ oder zusätzlich kann für zumindest einen Teil der Funktionen bzw. alle Funktionen die erste Operation auch derart festgelegt sein, dass sie eine Dekrementierung des Stands des globalen Zählers um eine vorbestimmte Konstante darstellt, wohingegen die zweite Operation in diesem Fall eine Inkrementierung des Stands des globalen Zählers um die vorbestimmte Konstante repräsentiert. Entsprechende Inkrementierungen bzw. Dekrementierungen stellen einfach zu implementierende Varianten von ersten bzw. zweiten Operationen dar.

Je nach Ausführungsform des Verfahrens können die Funktionen, für welche entsprechende erste und zweite Operationen zur Veränderung des globalen Zählers durchgeführt werden, unterschiedlich ausgestaltet sein. In einer Variante stellt zumindest ein Teil der jeweiligen Funktionen, für welche die Schritte ii) und iii) durgeführt werden, jeweils eine übergeordnete Funktion dar, welche außerhalb eines Aufrufs einer anderen Funktion und damit auf der obersten Ebene der Programmausführung aufgerufen wird. Alternativ oder zusätzlich können eine oder mehrere der jeweiligen Funktionen, für welche die Schritte ii) und iii) durchgeführt werden, jeweils eine untergeordnete Funktion darstellen, welche innerhalb des Aufrufs einer anderen Funktion aufgerufen wird. Durch Implementierung des Verfahrens in übergeordneten und untergeordneten Funktionen kann eine Vielzahl von unterschiedlichen Programmabschnitten in geeigneter Weise durch das Verfahren dahingehend geschützt werden, dass Manipulationen in diesen Programmabschnitten bzw. in entsprechenden Funktionen erkannt werden.

In einer Ausgestaltung des erfindungsgemäßen Verfahrens liegt der zumindest eine Prüfzeitpunkt innerhalb des Aufrufs der jeweiligen Funktion. Alternativ oder zusätzlich ist es jedoch auch möglich, dass ein oder mehrere Prüfzeitpunkte in einem Programmabschnitt zeitlich nach dem Aufruf der jeweiligen Funktion liegen.

In einer besonders bevorzugten Ausführungsform des erfindungsgemäßen Verfahrens wird neben der oben beschriebenen globalen Programmflusskontrolle über einen globalen Zähler ferner eine lokale Programmflusskontrolle für zumindest einen Teil der aufgerufenen Funktionen realisiert. Im Rahmen dieser lokalen Programmflusskontrolle wird in einem Schritt a) ein erster lokaler Zähler, der nur innerhalb der aufgerufenen Funktion gültig ist, mit einem ersten Startwert initialisiert, wobei der Stand des ersten lokalen Zählers anschließend ein oder mehrere Male an beliebigen Stellen innerhalb des Aufrufs der Funktion mittels einer dritten Operation verändert wird, welche durch eine vierte komplementäre Operation rückgängig gemacht werden kann.

In einem Schritt b) der lokalen Programmflusskontrolle wird ferner ein zweiter lokaler Zähler, der innerhalb der aufgerufenen Funktion gültig ist, mit einem zweiten Startwert initialisiert, wobei der Stand des zweiten lokalen Zählers anschließend ein oder mehrere Male an beliebigen Stellen innerhalb des Aufrufs der Funktion mittels der vierten Operation verändert wird. Der zweite Startwert ist dabei ein basierend auf der dritten und vierten Operation definierter Komplementärwert des ersten Startwerts. Der Komplementärwert (auch als inverser Wert bezeichnet) wird durch eine geeignete Rechenoperation erzeugt. Dabei entspricht der Wert, der sich durch Anwenden der dritten Operation auf den ersten Startwert ergibt, dem Komplementärwert desjenigen Werts, der sich durch Anwenden der vierten Operation auf den Komplementärwert des ersten Startwerts (d.h. auf den zweiten Startwert) ergibt. In einer besonders bevorzugten Ausführungsform entspricht die dritte Operation der oben beschriebenen ersten Operation und die vierte Operation der oben beschriebenen zweiten Operation oder umgekehrt. Das heißt, in einer bevorzugten Variante kann die dritte Operation durch eine Inkrementierung bzw. Dekrementierung und die vierte Operation durch eine entsprechende Dekrementierung bzw. Inkrementierung repräsentiert werden.

In einem Schritt c) der lokalen Programmflusskontrolle wird an zumindest einem Prüfzeitpunkt innerhalb des Aufrufs der Funktion, zu dem bei korrektem Programmablauf der erste Startwert genauso oft mittels der dritten Operation wie der zweite Startwert mittels der vierten Operation verändert wurde, der Komplementärwert des Stands des ersten lokalen Zählers mit dem Stand des zweiten lokalen Zählers verglichen. Alternativ kann auch der Komplementärwert des Stands des zweiten lokalen Zählers mit dem Stand des ersten lokalen Zählers verglichen werden. Bei einer Übereinstimmung wird die Ausführung des Programms fortgesetzt. Ansonsten (d.h. bei einer Abweichung) wird wiederum eine Fehlerbehandlung durchgeführt und insbesondere das Programm abgebrochen.

Mit der soeben beschriebenen lokalen Programmflusskontrolle können einzelne aufgerufene Funktionen nochmals zusätzlich geschützt werden, wobei zur Detektion eines Angriffs wiederum kein Vergleich mit verschiedenen Vergleichswerten, sondern lediglich ein Vergleich zwischen zwei lokalen Zählern durchgeführt werden muss.

In einer bevorzugten Variante stellen eine oder mehrere der jeweiligen Funktionen, für welche die Schritte a) bis c) der lokalen Programmflusskontrolle durchgeführt werden, jeweils eine übergeordnete Funktion dar, welche außerhalb eines Aufrufs an anderen Funktionen aufgerufen wird. Alternativ oder zusätzlich besteht jedoch auch die Möglichkeit, dass eine oder mehrere der jeweiligen Funktionen, für welche die Schritte a) bis c) der lokalen Programmflusskontrolle durchgeführt werden, jeweils eine untergeordnete Funktion darstellen, welche innerhalb des Aufrufs einer anderen Funktion aufgerufen wird. Auf diese Weise kann eine Vielzahl von unterschiedlichen Funktionen und insbesondere auch ineinander verschachtelte Funktionen geeignet über eine lokale Programmflusskontrolle geschützt werden.

In einer weiteren Variante der oben beschriebenen lokalen Programmflusskontrolle liegt der zumindest eine Prüfzeitpunkt bei einem Aussprung der aufgerufenen Funktion. Unter Aussprung wird dabei ein regulärer (d.h. im Rahmen eines korrekten Programmablaufs vorgesehener) Zeitpunkt des Verlassens der Funktion verstanden.

Für alle Ausgestaltungen ist anzumerken, dass im Programm neben den (durch globale und/ oder lokale Zähler) abgesicherten Funktionen auch weitere Funktionen aufgerufen werden können. Insbesondere können sicherheitskritische Funktionen mittels Zähler abgesichert sein. Dagegen muss der Aufruf sicherheitsunkritischer Funktionen nicht durch Zähler überwacht sein. Alternativ können alle Funktionen im Programm durch die Zähler abgesichert werden. Ebenso ist anzumerken, dass eine abgesicherte Funktion (1. Ebene) zumindest eine weitere abgesicherte Funktion aufrufen kann. Die aufgerufene Funktion der zweiten Ebene kann wiederum abgesichert eine Funktion aufrufen. Die Anzahl der (abgesicherten) Funktionen umfasst entsprechend Funktionen die vorzugsweise in mindestens zwei (bzw. drei) Aufrufebenen angeordnet sind.

Das erfindungsgemäße Verfahren kann für beliebige Programme auf Sicherheitsmodulen eingesetzt werden. Das Sicherheitsmodul ist ein Hardwaresicherheitsmodul. Es kann als tragbarer Datenträger ausgestaltet sein, wie beispielsweise Chipkarte, RFID-Einheit oder USB-Token. Es kann aber auch als fest in ein Endgerät integriertes Sicherheitsmodul, wie embedded SIM-Modul, TPM-Modul oder NFC-Modul ausgestaltet sein. In einer Variante ist das Programm eine Zahlungsverkehrsapplikation zur Ausführung von monetären Transaktionen, eine Authentisierungsapplikation, eine Signaturapplikation oder eine Entschlüsselungsapplikation. In Ausführungsformen ist das Programm vorzugsweise als Java Card Applet auf dem Sicherheitsmodul implementiert.

Neben dem oben beschriebenen Verfahren betrifft die Erfindung ferner ein Sicherheitsmodul mit einem Mikroprozessor, der zur Ausführung eines Programms basierend auf dem oben beschriebenen erfindungsgemäßen Verfahren bzw. einer oder mehrerer bevorzugter Varianten des oben beschriebenen Verfahrens eingerichtet ist.

Ausführungsbeispiele der Erfindung werden nachfolgend anhand der beigefügten Figuren detailliert beschrieben.

Es zeigen:
- Fig. 1: ein Flussdiagramm, welches eine Ausführungsform des erfindungsgemäßen Verfahrens wiedergibt; und
- Fig. 2: ein Flussdiagramm, welches eine Erweiterung des Verfahrens der Fig. 1 zeigt.

Der im Folgenden beschriebene Programmablauf basiert auf einem Programm, das exemplarisch in einem tragbaren Datenträger und insbesondere einer Chipkarte hinterlegt ist. In einer bevorzugten Variante handelt es sich bei dem Programm um eine Zahlungsverkehrsanwendung, mit der über den Chip der Chipkarte ein Zahlungsvorgang durchgeführt wird. Das Programm ist dabei insbesondere ein sog. Java Applet auf der Chipkarte.

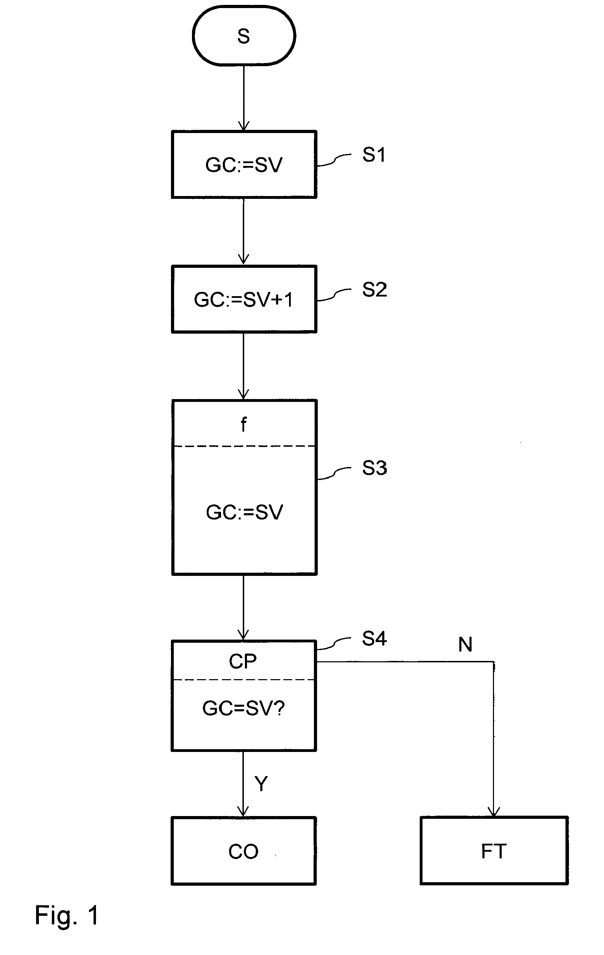

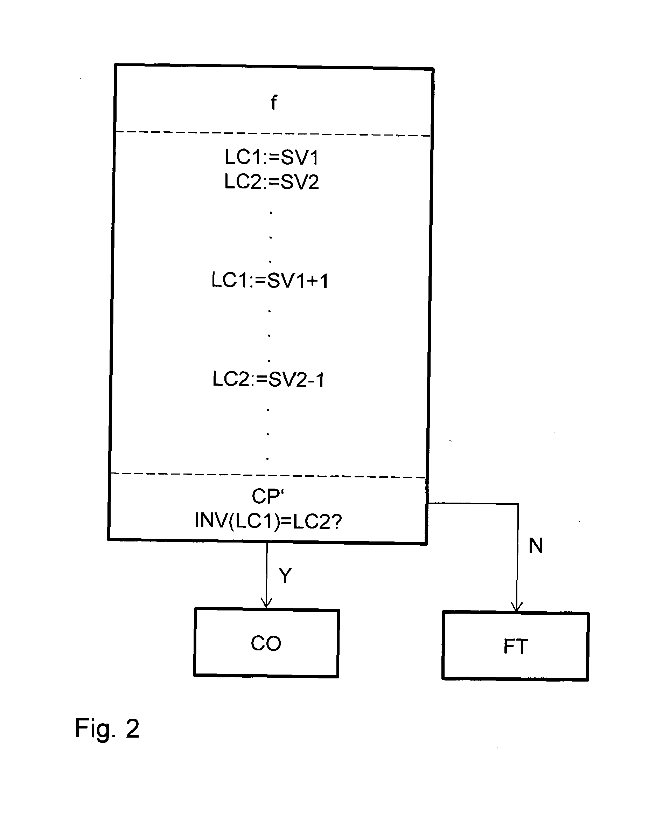

Im Rahmen der in Fig. 1 und Fig. 2 beschriebenen Programmausführung werden nur die für das erfindungsgemäße Verfahren wesentlichen Verfahrensschritte beschrieben. Das Programm umfasst tatsächlich eine Vielzahl von weiteren Verfahrensschritten bzw. aufgerufenen Funktionen.

Das Verfahren der Fig. 1 beginnt zu einem Startzeitpunkt S, der beispielsweise das Einlesen eines Kommandos durch das Programm darstellen kann. Bei der Programmausführung wird auf der obersten Programmebene, in der noch keine (gekapselten) Funktionen aufgerufen werden, ein globaler Zähler GC definiert, für den ein vorgegebener Initialwert SV in Schritt S1 festgelegt wird. Der globale Zähler GC ist eine übergeordnete Zählvariable, welche für alle später aufgerufenen Funktionen sowie weitere Unterfunktionen gültig ist.

Wie erwähnt, werden im Programmablauf der Fig. 1 Funktionen aufgerufen, wobei innerhalb des Aufrufs einer Funktion vorbestimmte Programmschritte durchgeführt werden. Beispielhaft ist in Fig. 1 in Schritt S3 der Aufruf einer Funktion f gezeigt. Im Rahmen des erfindungsgemäßen Verfahrens wird dabei vor dem Aufruf einer entsprechenden Funktion f der Stand SV des globalen Zählers GC mit einer geeigneten Operation verändert, wobei im hier beschriebenen Ausführungsbeispiel die Veränderung eine Inkrementierung des Zählerstands auf den Wert SV+1 darstellt. Diese Inkrementierung ist in Fig. 1 in Schritt S2 angedeutet und kann zu einem beliebigen Zeitpunkt vor dem Aufruf der Funktion f erfolgen. Entscheidend ist jedoch, dass für jede aufgerufene Funktion f vor deren Aufruf eine Inkrementierung des Zählers GC erfolgt. Der veränderte Zählerstand wird anschließend an einer geeigneten Stelle innerhalb der Funktion f, z.B. zu Beginn der Programmausführung der Funktion, mit einer inversen Operation verändert, d.h. der Stand des Zählers wird auf den Wert SV dekrementiert, wie auch aus Fig. 1 ersichtlich ist.

Zwischen Schritt S2 und Schritt S3 können ggf. weitere Inkrementierungen und auch weitere Funktionsaufrufe liegen. Dabei wird der weiter unten beschriebene Prüfzeitpunkt CP immer derart festgelegt, dass die Anzahl der Inkrementierungen gemäß den entsprechenden Schritten S2 und die Anzahl der Dekrementierungen gemäß den entsprechenden Schritten S3 bei korrektem Programmablauf (d.h. einem Programmablauf ohne Manipulationen) einander entsprechen.

Nach Abschluss der Ausführung der Funktion f wird in einem Schritt S4 zu dem Prüfzeitpunkt CP die Überprüfung durchgeführt, ob der Stand des globalen Zählers GC dem Initialwert SV entspricht. In der Ausführungsform der Fig. 1 ist der Prüfzeitpunkt außerhalb der Funktion f gewählt. Nichtsdestotrotz kann in bestimmten Ausführungsformen der Prüfzeitpunkt auch innerhalb der Funktion f liegen, solange die Anzahl von zuvor durchgeführten Inkrementierungen und Dekrementierungen des globalen Zählers bei korrekter Programmausführung gleich groß ist.

Wird in Schritt S4 festgestellt, dass der Stand des globalen Zählers GC nicht dem Initialwert SV entspricht (Zweig N aus S4), wird eine Fehlerbehandlung FT (FT = Fault Treatment) durchgeführt. In einer bevorzugten Variante wird gemäß der Fehlerbehandlung das Programm abgebrochen. Hierdurch wird berücksichtigt, dass im Falle einer Abweichung des Stands des globalen Zählers vom Wert SV Fehler im Programmablauf aufgetreten sein müssen. Insbesondere wurden bestimmte Funktionen nicht oder nur teilweise aufgerufen. Demgegenüber wird im Falle, dass der Stand des globalen Zählers GC dem Wert SV entspricht (Zweig Y aus S4), das Programm ordnungsgemäß fortgesetzt, was durch das Bezugszeichen CO (CO = Continue) angedeutet ist. In diesem Fall kann aufgrund der Übereinstimmung des Stands des Zählers mit dem Wert SV davon ausgegangen werden, dass im Vorfeld keine Manipulationen am Programm durchgeführt wurden.

Das anhand von Fig. 1 beschriebene Verfahren wurde basierend auf einer übergeordneten Funktion f beschrieben, welche auf der obersten Hierarchieebene des Programmablaufs liegt, d.h. die Funktion f ist selbst nicht in einer weiteren Funktion enthalten. Nichtsdestotrotz kann das oben beschriebene Verfahren analog auch in Kombination mit untergeordneten Funktionen durchgeführt werden, welche in anderen Funktionsaufrufen enthalten sind. Insbesondere können auch mehrere Unterfunktionsaufrufe ineinander verschachtelt sein. Es ist dabei lediglich sicherzustellen, dass für jede aufgerufene Unterfunktion, in der der Stand des Zählers GC dekrementiert wird, zuvor eine Inkrementierung des Zählers erfolgt ist und die Prüfzeitpunkte derart gewählt sind, dass zu diesen Zeitpunkten bei korrektem Programmablauf der Stand des globalen Zählers dem Initialwert SV entspricht. In einer bevorzugten Variante können somit alle übergeordneten und untergeordneten Funktionen in einem Programm in geeigneter Weise mit einem einzigen globalen Zähler gegen Manipulationen geschützt werden.

Fig. 2 zeigt eine Abwandlung des Verfahrens der Fig. 1, bei dem zusätzlich einzelne aufgerufene Funktionen über lokale Variablen geschützt werden, welche nur in den jeweiligen aufgerufenen Funktionen gültig sind. In Fig. 2 ist diese Abwandlung für die in Fig. 1 ausgeführte Funktion f gezeigt. Die Funktion f der Fig. 2 beinhaltet dabei auch den Schritt, gemäß dem der globale Zähler GC dekrementiert wird. Dieser Schritt ist jedoch in Fig. 2 nicht nochmals dargestellt.

Gemäß Fig. 2 definiert die Funktion f die beiden lokalen Zähler LC1 und LC2. Zu Beginn des Funktionsaufrufs wird der Stand des ersten Zählers LC1 auf einen ersten Startwert SV1 gesetzt, wohingegen dem zweiten lokalen Zähler LC2 der Startwert SV2 zugewiesen wird. Bei dem Startwert SV2 handelt es sich um einen Komplementärwert des Startwerts SV1, wobei sich dieser Komplementärwert auf die Operationen der Inkrementierung und Dekrementierung bezieht. Wird der erste Startwert SV1 beispielsweise durch einen positiven Ganzzahlwert repräsentiert, ist der Komplementärwert SV2 der entsprechende negative Ganzzahlwert.

Im Rahmen der Ausführung der Funktion f wird zu einem beliebigen Zeitpunkt innerhalb der Funktion der Stand des ersten lokalen Zählers LC1 um Eins inkrementiert. Ebenso wird zu einem beliebigen anderen Zeitpunkt innerhalb der Funktion der Stand des zweiten lokalen Zählers LC2 um Eins dekrementiert. Zu einem vorgegebenen Prüfzeitpunkt CP', der nach erfolgter Inkrementierung des Zählers LC1 und erfolgter Dekrementierung des Zählers LC2 am Ende der aufgerufenen Funktion f liegt, wird überprüft, ob der Komplementärwert (d.h. das Inverse INV) des ersten lokalen Zählers LC1 dem zweiten lokalen Zähler LC2 entspricht. Stimmen diese beiden Werte nicht überein, kann davon ausgegangen werden, dass innerhalb der aufgerufenen Funktion eine Manipulation durchgeführt wurde. In diesem Fall (Zweig N) wird wiederum eine Fehlerbehandlung FT durchgeführt, welche in einer bevorzugten Variante dem Abbruch des Programms entspricht.

Demgegenüber wird im Falle einer Übereinstimmung der Werte im Prüfzeitpunkt CP' das Programm ordnungsgemäß fortgesetzt, was wiederum durch das Bezugszeichen CO angedeutet ist. In diesem Fall kann davon ausgegangen werden, dass der Programmablauf der Funktion ordnungsgemäß erfolgt ist. In Analogie zu dem Verfahren der Fig. 1 können entsprechende lokale Variablen nicht nur in übergeordneten Funktionen, sondern auch in Unterfunktionen implementiert werden, welche innerhalb anderer aufgerufener Funktionen ausgeführt werden. Insbesondere können entsprechende Variablen auch für ineinander verschachtelte Funktionsaufrufe für jede einzelne Funktion festgelegt werden. Auf diese Weise wird die Fehlererkennung des Verfahrens verbessert.

In einer weiteren Variante des Verfahrens der Fig. 2 kann der erste lokale Zähler LC 1 auch mehrmals inkrementiert und der zweite lokale Zähler LC 2 auch mehrmals dekrementiert werden. Ebenso können mehrere entsprechende Prüfzeitpunkte CP' innerhalb der aufgerufenen Funktion festgelegt sein. Dabei ist lediglich darauf zu achten, dass zu einem jeweiligen Prüfzeitpunkt die Anzahl der Inkrementierungen des ersten lokalen Zählers LC 1 der Anzahl der Dekrementierungen des zweiten lokalen Zählers LC 2 entspricht.

Die im Vorangegangenen beschriebenen Ausführungsformen des erfindungsgemäßen Verfahrens weisen eine Reihe von Vorteilen auf. Insbesondere kann eine globale Flusskontrolle eines ausgeführten Programms mit einem einzelnen globalen Zähler, gegebenenfalls in Kombination mit lokalen Programmflusskontrollen über entsprechende lokale Zähler, erreicht werden. Dabei muss bei einem Prüfzeitpunkt der Stand des globalen Zählers nur mit einem anfangs festgelegten Startwert verglichen werden, ohne dass für unterschiedliche Prüfzeitpunkte im Programmablauf verschiedene Vergleichswerte festgelegt werden müssen. In gleicher Weise muss bei einer lokalen Programmflusskontrolle immer nur ein Vergleich zwischen zwei lokalen Zählern durchgeführt werden, ohne dass verschiedene Vergleichswerte berücksichtigt werden müssen. Auf diese Weise werden fehlerhafte Detektionen eines tatsächlich korrekten Programmablaufs aufgrund falsch gewählter bzw. nicht alle Fälle berücksichtigender Vergleichswerte vermieden. Das Verfahren kann dabei in einfacher Weise implementiert werden.

Über die Verwendung eines globalen und gegebenenfalls auch lokaler Zähler für eine Vielzahl von übergeordneten und untergeordneten Funktionen kann eine höhere Sicherheit auch für tief geschachtelte Funktionsaufrufe erreicht werden. Mittels der Verwendung einer lokalen Programmflusskontrolle kann ferner die Kapselung und getrennte Absicherung einzelner Funktionen ermöglicht werden, ohne dass dabei andere Funktionen berücksichtigt werden müssen.

## Patentansprüche

1. Verfahren zur Ausführung eines Programms über einen Mikroprozessor auf einem Sicherheitsmodul, wobei im Programmablauf eine Anzahl von Funktionen (f) aufgerufen wird, wobei
i) der Stand eines globalen Zählers (GC), der im Programm übergreifend für die Anzahl von Funktionen (f) gültig ist, mit einem vorgegebenen Wert (SV) initialisiert wird;
ii) für eine jeweilige Funktion (f) zumindest eines Teils der Funktionen (f) in einem Abschnitt des Programms zeitlich vor dem Aufruf der jeweiligen Funktion (f) der Stand des globalen Zählers (GC) mittels einer ersten Operation verändert wird, welche durch eine zweite komplementäre Operation rückgängig gemacht werden kann;
iii) innerhalb des Aufrufs der jeweiligen Funktion (f) der Stand des globalen Zählers (GC) mittels der zweiten Operation verändert wird;
iv) an zumindest einem Prüfzeitpunkt (CP), zu dem bei korrektem Programmablauf der Stand des globalen Zählers (GC) genauso oft mittels der ersten Operation gemäß Schritt ii) wie mit der zweiten Operation gemäß Schritt iii) verändert wurde, der Stand des globalen Zählers (GV) mit dem vorgegebenen Wert (SV) verglichen wird, wobei bei einer Übereinstimmung die Ausführung des Programms fortgesetzt wird und ansonsten eine Fehlerbehandlung (FT) erfolgt.

2. Verfahren nach Anspruch 1, **dadurch gekennzeichnet, dass** für zumindest einen Teil der jeweiligen Funktionen (f), für welche die Schritte ii) und iii) durchgeführt werden, die erste Operation eine Inkrementierung des Stand des globalen Zählers (GC) um eine vorbestimmte Konstante darstellt und die zweite Operation eine Dekrementierung des Stands des globalen Zählers (GC) um die vorbestimmte Konstante darstellt.

3. Verfahren nach Anspruch 1 oder 2, **dadurch gekennzeichnet, dass** für zumindest einen Teil der jeweiligen Funktionen (f), für welche die Schritte ii) und iii) durchgeführt werden, die erste Operation eine Dekrementierung des Stand des globalen Zählers (GC) um ein vorbestimmte Konstante darstellt und die zweite Operation eine Inkrementierung des Stands des globalen Zählers (GC) um die vorbestimmte Konstante darstellt.

4. Verfahren nach einem der vorhergehenden Ansprüche, **dadurch gekennzeichnet, dass** eine oder mehrere der jeweiligen Funktionen (f), für welche die Schritte ii) und iii) durchgeführt werden, jeweils eine übergeordnete Funktion darstellen, welche außerhalb eines Aufrufs einer anderen Funktion aufgerufen wird.

5. Verfahren nach einem der vorhergehenden Ansprüche, **dadurch gekennzeichnet, dass** eine oder mehrere der jeweiligen Funktionen (f), für welche die Schritte ii) und iii) durchgeführt werden, jeweils eine untergeordnete Funktion darstellen, welche innerhalb des Aufruf einer anderen Funktion aufgerufen wird.

6. Verfahren nach einem der vorhergehenden Ansprüche, **dadurch gekennzeichnet, dass** der zumindest eine Prüfzeitpunkt (CP) innerhalb des Aufrufs der jeweiligen Funktion (f) und/oder in einem Programmabschnitt zeitlich nach dem Aufruf der jeweilige Funktion (f) liegt.

7. Verfahren nach einem der vorhergehenden Ansprüche, **dadurch gekennzeichnet, dass** für eine aufgerufene Funktion (f) zumindest eines Teils der Funktionen (f):
a) ein erster lokaler Zähler (LC1), der innerhalb der aufgerufenen Funktion (f) gültig ist, mit einem ersten Startwert (SV1) initialisiert wird, wobei der Stand des ersten lokalen Zählers (LC 1) anschließend ein oder mehrere Male innerhalb des Aufrufs der Funktion (f) mittels einer dritten Operation verändert wird, welche durch eine vierte komplementäre Operation rückgängig gemacht werden kann;
b) ein zweiter lokaler Zähler (LC2), der innerhalb der aufgerufenen Funktion (f) gültig ist, mit einem zweiten Startwert (SV2) initialisiert wird, wobei der Stand des zweiten lokalen Zählers (LC 2) anschließend ein oder mehrere Male innerhalb des Aufrufs der Funktion (f) mittels der vierten Operation verändert wird, wobei der zweite Startwert (SV2) ein basierend auf der dritten und vierten Operation definierter Komplementärwert des ersten Startwerts (SV1) ist;
c) an zumindest einem Prüfzeitpunkt (CP') innerhalb des Aufrufs der Funktion (f), zu dem bei korrektem Programmablauf der erste Startwert (SV1) genauso oft mittels der dritten Operation wie der zweite Startwert (SV2) mittels der vierten Operation verändert wurde, der Komplementärwert des Stands des ersten lokalen Zählers (LC1) mit dem Stand des zweiten lokalen Zählers (LC2) oder der Komplementärwert des Stands des zweiten lokalen Zählers (LC2) mit dem Stand des ersten lokalen Zählers (LC1) verglichen wird, wobei bei einer Übereinstimmung die Ausführung des Programms fortgesetzt wird und ansonsten eine Fehlerbehandlung (FT) erfolgt.

8. Verfahren nach Anspruch 7, **dadurch gekennzeichnet, dass** die dritte Operation der ersten Operation entspricht und die vierte Operation der zweiten Operation entspricht oder dass die dritte Operation der zweiten Operation entspricht und die vierte Operation der ersten Operation entspricht.

9. Verfahren nach Anspruch 7 oder 8, **dadurch gekennzeichnet, dass** eine oder mehrere der jeweiligen Funktionen (f), für welche die Schritte a) bis c) durchgeführt werden, jeweils eine übergeordnete Funktion darstellen, welche außerhalb eines Aufrufs einer anderen Funktion aufgerufen wird.

10. Verfahren nach einem der Ansprüche 7 bis 9, **dadurch gekennzeichnet, dass** eine oder mehrere der jeweiligen Funktionen (f), für welche die Schritt a) bis c) durchgeführt werden, jeweils eine untergeordnete Funktion darstellen, welche innerhalb des Aufruf einer anderen Funktion aufgerufen wird.

11. Verfahren nach einem der Ansprüche 7 bis 10, **dadurch gekennzeichnet, dass** der zumindest eine Prüfzeitpunkt (CP') bei einem Aussprung der aufgerufenen Funktion (f) liegt.

12. Verfahren nach einem der vorhergehenden Ansprüche, **dadurch gekennzeichnet, dass** als Programm eine Zahlungsverkehrsapplikation und/ oder ein Java Applet ausgeführt wird.

13. Sicherheitsmodul, umfassend einen Mikroprozessor, der zur Ausführung eines Programms eingerichtet ist, bei dem im Programmablauf eine Anzahl von Funktionen aufgerufen wird, wobei
i) der Stand eines globalen Zählers (GC), der im Programm übergreifend für die Anzahl der Funktionen (f) gültig ist, mit einem vorgegebenen Wert (SV) initialisiert wird;
ii) für eine jeweilige Funktion (f) zumindest eines Teils der Funktionen (f) in einem Abschnitt des Programms zeitlich vor dem Aufruf der jeweiligen Funktion (f) der Stand des globalen Zählers (GC) mittels einer ersten Operation verändert wird, welche durch eine zweite komplementäre Operation rückgängig gemacht werden kann;
iii) innerhalb des Aufrufs der jeweiligen Funktion (f) der Stand des globalen Zählers (GC) mittels der zweiten Operation verändert wird;
iv) an zumindest einem Prüfzeitpunkt (CP), zu dem bei korrektem Programmablauf der Stand des globalen Zählers (GC) genauso oft mittels der ersten Operation gemäß Schritt ii) wie mit der zweiten Operation gemäß Schritt iii) verändert wurde, der Stand des globalen Zählers (GV) mit dem vorgegebenen Wert (SV) verglichen wird, wobei bei einer Übereinstimmung die Ausführung des Programms fortgesetzt wird und ansonsten eine Fehlerbehandlung (FT) erfolgt.

14. Sicherheitsmodul nach Anspruch 13, **dadurch gekennzeichnet, dass** der Mikroprozessor zur Ausführung eines Verfahrens nach einem der Ansprüche 2 bis 12 eingerichtet ist.
